# EUROPÄISCHE PATENTSCHRIFT

(11) **EP 2 659 121 B1**
(45) Veröffentlichungstag und Bekanntmachung des Hinweises auf die Patenterteilung: **16.09.2015**
(21) Anmeldenummer: 11787897.5
(22) Anmeldetag: 25.11.2011
(51) Int. Cl.: F02M 25/08, G01M 3/32

(54) **VORRICHTUNG ZUM WAHLWEISEN REGENERIEREN ODER DURCHFÜHREN EINER TANKLECKDIAGNOSE EINES TANKENTLÜFTUNGSSYSTEMS**
DEVICE FOR SELECTIVELY REGENERATING OR PERFORMING TANK LEAKAGE DIAGNOSIS OF A TANK VENTILATION SYSTEM
DISPOSITIF DE RÉGÉNÉRATION SÉLECTIVE OU DE RÉALISATION D'UN DIAGNOSTIC DE FUITE D'UN RÉSERVOIR D'UN SYSTÈME DE VENTILATION DE RÉSERVOIR

(30) Priorität: 28.12.2010 DE 102010064240
(43) Veröffentlichungstag der Anmeldung: 06.11.2013
(73) Patentinhaber: Robert Bosch GmbH, 70442 Stuttgart (DE)
(72) Erfinder: HAAG, Silke, 74360 Ilsfeld-Auenstein (DE); DENZ, Helmut, 70184 Stuttgart (DE); PAPE, Andreas, 71739 Oberriexingen (DE); FRANZ, Manfred, 71254 Ditzingen (DE)
(86) Internationale Anmeldenummer: PCT/EP2011/071017
(87) Internationale Veröffentlichungsnummer: WO 2012/089433

(56) Entgegenhaltungen:
- WO-A1-02/081898
- DE-A1- 4 312 720
- DE-A1- 19 617 957
- US-A1- 2004 173 013

## Beschreibung

### Stand der Technik

Die Erfindung betrifft eine Vorrichtung zum wahlweisen Regenerieren und Durchführen einer Tankleckdiagnose eines Tankentlüftungssystems, insbesondere eines Kraftfahrzeugs, mit einem Sorptionsfilter zum temporären Speichern von verdampfendem Kraftstoff aus einem Kraftstofftank und einer dem Sorptionsfilter frischluftseitig angeordneten Pumpe. Ferner betrifft die Erfindung ein Kraftfahrzeug mit einer erfindungsgemäßen Vorrichtung.

In einem Kraftstofftank eines Kraftfahrzeugs verdampfen in Abhängigkeit von den im Tank herrschenden Druck- und Temperaturbedingungen sowie einer Zusammensetzung des Kraftstoffes flüchtige Substanzen, wie im Wesentlichen Kohlenwasserstoffe und in einem geringeren Anteil weitere flüchtige Komponenten. Aus Gründen des Umweltschutzes und der Sicherheit müssen diese Substanzen aufgefangen und dem Motor zur Verbrennung zugeführt werden. Hierfür werden die flüchtigen Substanzen in der Regel mittels eines Aktivkohlefilters adsorbiert und zwischengespeichert. Zur Regenerierung bzw. Desorption des Aktivkohlefilters werden die Substanzen mittels eines Fluidstroms - in der Regel Frischluft - abgesaugt und einem dem Verbrennungsmotor vorgeordneten Saugrohr zur Verbrennung zugeführt. Das Absaugen geschieht dabei mittels Unterdruck, der sich im Saugrohr aufgrund einer Drosselung des Motors einstellt.

Bei Turbomotoren, Hybridfahrzeugen und anderen Motoren, bei denen zur Reduzierung des Kraftstoffverbrauchs der Motor möglichst entdrosselt betrieben wird, besteht grundsätzlich das Problem, dass eine konventionelle Tankentlüftung über einen Unterdruck des Saugrohrs den Aktivkohlefilter nicht hinreichend regeneriert.

Die Gesetzgebung einiger Staaten fordert ferner eine Überprüfung der Funktionsfähigkeit von Tankentlüftungssystemen bei Kraftfahrzeugen mit bordeigenen Mitteln, das heißt eine so genannte On-Board-Diagnose (OBD). Im Rahmen der On-Board-Diagnose müssen etwaige Lecks erkannt, signalisiert und entsprechende Daten einem bordeigenen Speicher für eine in einer Werkstatt durchzuführende Off-Board-Diagnose zur Verfügung gestellt werden.

DE 101 31 162 A1 offenbart eine Vorrichtung zur Dichtheitsprüfung einer Tankentlüftungsanlage eines Kraftfahrzeugs mit einer mittels eines Umschaltventils wahlweise mit der Tankentlüftungsanlage und mit wenigstens einer Referenzblende verbindbaren, elektrisch betriebenen Druckquelle. Wenn die Tankentlüftungsanlage bzw. die Referenzblende mit einem Über- oder Unterdruck beaufschlagt wird, wird dabei eine elektrische Kenngröße bzw. eine elektrische Referenzkenngröße der Druckquelle ermittelt. Die Kenngrößen werden miteinander verglichen und aus dem Ergebnis des Vergleichs auf das Vorliegen einer Undichtigkeit des Tankentlüftungssystems geschlossen.

Ferner offenbart DE 197 35 549 A1 eine Vorrichtung zur Diagnose einer Tankentlüftungsanlage eines Fahrzeugs mit einem Tank und einem Adsorptionsfilter, der über eine Tankanschlussleitung mit dem Tank verbunden ist. Zur Entlüftung umfasst die Tankentlüftungsanlage ein Tankentlüftungsventil, das mit dem Adsorptionsfilter über eine Ventilleitung verbunden ist. Ein Schaltmittel beaufschlagt mittels einer bordeigenen Druckquelle abwechselnd die Tankentlüftungsanlage und ein Referenzleck mit einem Druck und ermittelt auf diese Art und Weise ein etwaiges Leck. Zwischen der bordeigenen Druckquelle und dem Schaltmittel ist ein Absperrmittel vorgesehen, das geöffnet und durchströmt wird, wenn sowohl das Referenzleck als auch die Tankentlüftungsanlage mit Druck beaufschlagt wird. Das Absperrmittel ist jedoch so angeordnet, dass es nicht von Regenerierluft durchströmt wird, sondern nur während der Diagnosevorgänge, wodurch eine geringe Verschmutzung und eine höhere Lebensdauer des Absperrmittels resultiert. Bei der Regenerierung des Adsorptionsfilters wird das Tankentlüftungsventil geöffnet, so dass aufgrund eines in einem Saugrohr herrschenden Unterdrucks Luft der Atmosphäre durch den Adsorptionsfilter gesaugt wird, wodurch die in dem Adsorptionsfilter angelagerten Kohlenwasserstoffe in das Saugrohr gesaugt und einer Brennkraftmaschine zugeführt werden.

Aus der WO02/081898 A1 ist eine Vorrichtung zum wahlweisen Regenerieren und Durchführen einer Tankleckdiagnose eines Tankentlüftungssystems bekannt, die einen Sorptionsfilter und eine Pumpe, die über ein Umschaltventil mit dem Sorptionsfilter fluidleitend verbunden ist, umfasst.

Aus der DE 4312720 A1 ist eine Vorrichtung zum wahlweisen Regenerieren und Durchführen einer Tankleckdiagnose eines Tankentlüftungssystems bekannt, die ein Umschaltventil in einer Ladeleitung zwischen einem Sorptionsfilter und einer Saugleitung aufweist.

Aus der DE 19617957 A1 ist eine weitere Vorrichtung zum wahlweisen Regenerieren und Durchführen einer Tankleckdiagnose eines Tankentlüftungssystems bekannt.

Aufgabe der Erfindung ist es, eine kostengünstig herzustellende Vorrichtung zur Verfügung zu stellen, die zum einen eine bessere Regenerierung bzw. Desorption des Sorptionsfilters ermöglicht und zum anderen eine On-Board-Diagnose einer etwaigen Leckage im Tankentlüftungssystem gewährleistet.

### Offenbarung der Erfindung

Erfindungsgemäß ist eine Vorrichtung zum wahlweisen Regenerieren und Durchführen einer Tankleckdiagnose eines Tankentlüftungssystems, insbesondere eines Kraftfahrzeugs, mit einem Sorptionsfilter zum temporären Speichern von verdampfendem Kraftstoff aus einem Kraftstofftank und einer dem Sorptionsfilter frischluftseitig angeordneten Pumpe, die mit dem Sorptionsfilter fluidleitend verbunden ist, geschaffen, wobei die Pumpe eingerichtet ist, eine Fluidströmung zum Regenerieren des Sorptionsfilters zu erzeugen.

Das Tankentlüftungssystem eines Kraftfahrzeugs umfasst einen Kraftstofftank, der vorzugsweise über eine Kraftstofftankanschlussleitung mit einem Sorptionsfilter, vorzugsweise einem Aktivkohleadsorptionsfilter, fluidleitend verbunden ist. Dieser Sorptionsfilter speichert temporär flüchtige Substanzen des Kraftstoffes, wie etwa flüchtige Kohlenwasserstoffe und andere Komponenten, die infolge von den im Tank vorliegenden Druck- und Temperaturbedingungen, insbesondere beim Betanken des Kraftstofftanks, freigesetzt werden.

Der Sorptionsfilter ist vorzugsweise über eine Spülleitung fluidleitend mit einem einem Verbrennungsmotor vorgeschalteten Saugrohr verbunden. In der Spülleitung ist vorzugsweise ein getaktetes Tankentlüftungsventil zwischengeschaltet, das geeignet ist, die Spülleitung wahlweise zum Spülen, das heißt zum Regenerieren des Sorptionsfilters mit variablen Spülraten freizugeben oder zu verschließen. Unabhängig vom Öffnungszustand des

Tankentlüftungsventils wird der im Kraftstofftank verdampfende Kraftstoff über die Tankanschlussleitung dem Filter zugeführt, wo er adsorbiert und temporär gespeichert wird.

Der Sorptionsfilter weist eine Seite auf, die der Atmosphäre, also der Frischluft zugewandt ist. Auf dieser der Frischluft zugewandten Seite ist eine Pumpe angeordnet, die vorzugsweise über ein Umschaltventil mit dem Sorptionsfilter fluidleitend verbunden ist.

In Ruhestellung des Umschaltventils kann ohne Aktivierung der Pumpe bei geöffnetem Tankentlüftungsventil durch den Saugrohrunterdruck Frischluft durch den Filter gesaugt werden, wodurch der in der Aktivkohle adsorbierte Kraftstoff desorbiert und dem Motor zur Verbrennung zugeführt wird. Vorzugsweise ist die Pumpe so gestaltet, dass sie im Stillstand einen geringen Strömungswiderstand aufweist.

Bei für die Regenerierung nicht ausreichendem Saugrohrunterdruck wird die Pumpe von einer Steuereinheit angesteuert. Die Pumpe erhält dabei ein Signal, gemäß dem sie erfindungsgemäß ein Spülfluid aktiv, das heißt ohne Saugrohrunterdruck, durch den Sorptionsfilter fördert.

Somit kann mit und ohne Saugrohrunterdruck immer ein hinreichend großer Fluidstrom in Richtung des Saugrohrs eingestellt werden, so dass der temporär mit verdampftem Kraftstoff angereicherte Sorptionsfilter mittels des Spülfluids regeneriert, das heißt im Wesentlichen vollständig desorbiert wird.

Es ist somit ein kostengünstiges System zu einer Regenerierratenerhöhung des Sorptionsfilters geschaffen. Die erfindungsgemäß eingerichtete Pumpe ist eine Regenerierpumpe, mittels der bei nicht ausreichendem Saugrohrunterdruck ein Frischluftpumpen erfolgen kann. Die Pumpe kann beispielsweise als eine Membranpumpe oder eine Flügelzellenpumpe gestaltet sein. Das zusätzliche Frischluftpumpen erfolgt vorzugsweise nur bei einer hohen Beladung des Sorptionsfilters mit flüchtigen Kraftstoffkomponenten. Damit findet eine mit dem Pumpen verbundene Leistungsaufnahme der erfindungsgemäßen Vorrichtung nur in einem Bedarfsfall statt - es liegt also eine bedarfsorientierte Regenerierratenerhöhung vor.

Ferner kann mittels der durch die Pumpe erzeugten Fluidströmung und einem abgesperrten Tankentlüftungsventil eine bestimmte Druckerhöhung im Tank erzeugt werden, wodurch ein Verdampfen des Kraftstoffes reduziert wird. Auch während der aktiven Regenerierung des Sorptionsfilters, nämlich bei geöffnetem Tankentlüftungsventil, wird ein bestimmter Druck im Kraftstofftank aufgebaut, wodurch ebenfalls eine Ausgasung des Kraftstoffs, insbesondere bei Bergfahrten, verringert wird.

Gemäß einer vorteilhaften Weiterbildung der erfindungsgemäßen Vorrichtung ist die Pumpe eingerichtet, eine Fluidströmung zum Durchführen einer Tankleckdiagnose zu erzeugen.

Bei einer derartigen Weiterbildung ist das Tankentlüftungsventil geschlossen. Die erfindungsgemäß eingerichtete Pumpe erhält vorzugsweise bei stehendem Motor und Fahrzeug von einem Steuergerät ein Signal, das die Pumpe veranlasst, Frischluft zu fördern. In einem Bereich zwischen der Pumpe, dem Tankentlüftungsventil und dem Kraftstofftank wird aufgrund der erzeugten Fluidströmung ein Überdruck im Tankentlüftungssystem erzeugt. Anhand von mittels eines Tankdrucksensors ermittelten Druckwerten bzw. eines bestimmten Druckverlaufs, der sich während des Aufpumpens und anschließend bei abgeschalteter Pumpe und einem Umschaltventil in Verschlussstellung einstellt, können im Rahmen einer On-Board-Diagnose etwaige Lecks detektiert werden. Es ist somit eine Feinleckdiagnose nach dem Überdruckprinzip im Fahrzeugstillstand geschaffen, das eine hohe Trennschärfe und Durchführbarkeit in jedem Fahrzyklus gewährleistet.

Mittels der erfindungsgemäß eingerichteten Pumpe kann der Druckaufbau auf ein bestimmtes Referenzniveau schnell erfolgen, wodurch die Zeitspanne, die für die Tankleckdiagnose erforderlich ist, reduziert wird.

Erfindungsgemäß ist die Pumpe über ein Umschaltventil, insbesondere über ein Zweiwege-Umschaltventil, mit dem Sorptionsfilter fluidleitend verbunden.

Die Pumpe ist eingerichtet, bei einer ersten Schaltstellung des Umschaltventils, in der eine Fluidverbindung zwischen der Pumpe und dem Sorptionsfilter freigegeben ist, eine Fluidströmung zum Durchführen einer Tankleckdiagnose oder zum Regenerieren des Sorptionsfilters zu erzeugen. In einer zweiten Schaltstellung des Umschaltventils wird die Fluidverbindung zum Sorptionsfilter bei abgeschalteter Pumpe versperrt.

Vorzugsweise ist das Zweiwegeventil ein bistabiles elektromagnetisch ansteuerbares Umschaltventil mit Lagerückmeldung, das durch kurze Ansteuerimpulse in die erste bzw. zweite Schaltstellung geschaltet wird. Hierdurch wird die Stromaufnahme des Ventils minimiert, was zu einem verbesserten Wirkungsgrad und verringerten Kraftstoffverbrauch führt.

Das Zweiwegeventil nimmt einerseits die erste Schaltstellung ein, wenn ein Betanken des Kraftstofftanks oder ein Regenerieren des Sorptionsfilters über einen Saugrohrunterdruck erfolgt. Hierfür ist die erfindungsgemäß eingerichtete Pumpe ausgeschaltet. Beim Betanken kann somit ein Druckausgleich mit der Umgebung über das geöffnete Umschaltventil erfolgen. Andererseits nimmt das Zweiwegeventil auch die erste Schaltstellung ein, wenn ein Regenerieren des Sorptionsfilters erfolgt oder ein Überdruck zum Durchführen einer Tankleckdiagnose aufgebaut wird. In diesem Fall ist die Pumpe eingeschaltet und fördert aktiv Fluid durch den Sorptionsfilter.

Die zweite Schaltstellung ist vom Zweiwegeventil eingenommen, das heißt der Frischluftzugang zum Sorptionsfilter wird fluiddicht verschossen, wenn die Tankleckdiagnose mittels eines Detektierens von Druckwerten durchgeführt wird.

Gemäß einem weiteren Ausführungsbeispiel der erfindungsgemäßen Vorrichtung ist das Umschaltventil ein Dreiwegeventil, das in einer ersten Schaltstellung eine Fluidverbindung zwischen der Pumpe und dem Sorptionsfilter pumpenseitig versperrt und eine Verbindung zwischen dem Sorptionsfilter und einer Bypassleitung zum Frischluftfilter freigibt, in einer zweiten Schaltstellung eine Fluidverbindung zwischen der Pumpe und dem Sorptionsfilter freigibt und die Verbindung zur Bypassleitung versperrt und in einer dritten Schaltstellung die Fluidverbindung zum Sorptionsfilter sorptionsfilterseitig versperrt.

Vorzugsweise ist das Dreiwegeventil ein tristabiles elektromagnetisch ansteuerbares Umschaltventil mit Stellungsrückmeldung, das durch kurze Ansteuerimpulse in die erste, zweite oder dritte Schaltstellung geschaltet wird. Hierdurch wird die Stromaufnahme des Ventils minimiert, was zu einem verbesserten Wirkungsgrad und verringerten Kraftstoffverbrauch führt.

In der ersten Schaltstellung des Dreiwegeventils ist die Pumpe ausgeschaltet und eine fluidleitende Verbindung zwischen dem Sorptionsfilter und einer Bypassleitung, die mit der Atmosphäre fluidleitend verbunden ist, hergestellt. In dieser Schaltstellung ist mit der Umgebung eine Druckausgleichsmöglichkeit mit einem geringen Strömungswiderstand während eines Betankens des Kraftstofftanks oder einer konventionellen Regenerierung des Sorptionsfilters über einen Saugrohrunterdruck zur Verfügung gestellt.

Das Dreiwegeventil nimmt die zweite Schaltstellung ein, wenn die Pumpe eingeschaltet wird und eine Fluidströmung zum Regenerieren des Sorptionsfilters oder zum Durchführen einer Tankleckdiagnose erzeugt.

Die dritte Schaltstellung liegt vor, das heißt der Frischluftzugang zum Sorptionsfilter wird fluiddicht verschossen, wenn Druckwerte zur Durchführung der Tankleckdiagnose ermittelt werden.

Gemäß einer weiteren vorteilhaften Weiterbildung der erfindungsgemäßen Vorrichtung ist eine Druckausgleichsleitung mit einem Druckbegrenzungsventil parallel zum Umschaltventil geschaltet und mit der Atmosphäre fluidleitend verbunden.

Die Druckausgleichsleitung verbindet den Sorptionsfilter fluidleitend unter Umgehung des Umschaltventils und der Pumpe mit der Atmosphäre. In der Druckausgleichsleitung ist ein Druckbegrenzungsventil zwischengeschaltet, das sich bei einem vorbestimmten Aktivierungsdruck in Richtung der Atmosphäre öffnet. Auf diese Weise kann Fluid, das beispielsweise während des Betankens aus dem Kraftstofftank verdrängt wird und durch den Strömungswiderstand der Pumpe oder des Umschaltventils einen zu hohen Druck im Tank erzeugt, zusätzlich über die Druckausgleichsleitung mit geringem Strömungswiderstand entweichen. So wird sichergestellt, dass während des Betankens kein zu hoher Druck im Tank aufgebaut wird, der zum Abschalten einer Zapfpistole führen könnte. Ferner ist in Fällen einer zu hohen Förderrate der Pumpe oder einer Druckerhöhung im Tank sichergestellt, dass kein Kraftstoffdampf durch ein Überdruckschutzventil am Tank, sondern nur gefiltert über den Adsorptionsfilter nach außen gelangt.

Gemäß einer weiteren vorteilhaften Weiterbildung der erfindungsgemäßen Vorrichtung ist die Pumpe als eine zweistufige Pumpe mit unterschiedlicher Förderleistung ausgebildet.

Vorzugsweise ist die Pumpe hierbei in Verbindung mit einer Pumpenstrommessung und einem Referenzbypass ausgebildet.

Bei einer derartigen Weiterbildung kann einerseits der Fluiddurchsatz der Pumpe vergrößert und die Regenerierrate weiter gesteigert werden. Andererseits kann eine Kleinleckdiagnose mit hoher Genauigkeit durchgeführt werden. Hierfür kann mittels der im Hinblick auf ihre Förderleistung zweistufig ausgebildeten Pumpe ein relativ geringer Volumenstrom zur Verfügung gestellt werden, der beispielsweise mit einem zum Umschaltventil parallel geschalteten Referenzleck abgeglichen wird.

Durch die erhöhte Förderleistung der Pumpe kann auch die Diagnosezeit verkürzt werden, indem zunächst mit einer größeren und für die Feinabstimmung mit einer geringeren Fördermenge - mit einer so genannten "Diagnose-Fördermenge" - gepumpt wird. Hierzu können ggf. während der Aufpumpphase des Tanks Testumschaltungen in bestimmten zeitlichen Abständen durchgeführt werden.

Gemäß einer weiteren vorteilhaften Weiterbildung der erfindungsgemäßen Vorrichtung ist die Pumpe über eine Steuereinheit getaktet ansteuerbar, wodurch die variable Förderleistung bewirkt wird.

Mit einer getakteten Ansteuerung kann ebenfalls der Fluiddurchsatz der Pumpe vergrößert und die Regenerierrate gesteigert werden. Ferner kann auch hier eine Kleinleckdiagnose mit hoher Genauigkeit durchgeführt werden. Mittels der Taktung kann ein geringerer Volumenstrom zur Verfügung gestellt werden, der beispielsweise mit einem zum Umschaltventil parallel geschalteten Referenzleck abgeglichen wird.

Gemäß einer weiteren vorteilhaften Weiterbildung der erfindungsgemäßen Vorrichtung ist die variable Förderleistung mittels einer unabhängig ansteuerbaren Zusatzpumpe mit einer höheren Förderleistung über ein Rückschlagventil parallel zur Pumpe bewirkt.

Durch die Verwendung einer Zusatzpumpe kann eine Erhöhung der Regenerierrate erfolgen. Die Zusatzpumpe kann über einen separaten Strompfad unabhängig von der erfindungsgemäß eingerichteten Pumpe gesteuert werden. Sie kann als Zusatzbauteil modular, diskret verschlaucht oder angeflanscht gestaltet sein, so dass die Zusatzpumpe nur in Fällen mit hohen Regenerieranforderungen zum Einsatz kommt.

Des Weiteren kann bei ausgeschalteter Zusatzpumpe über eine Basispumpe mit kleinerer Förderleistung eine Kleinleckdiagnose mit hoher Genauigkeit gemäß des oben genannten Vorgehens durchgeführt werden.

Ferner ist ein Verfahren zum wahlweisen Regenerieren und Durchführen einer Tankleckdiagnose eines Tankentlüftungssystems offenbart. Das Verfahren umfasst folgende Schritte:
- Vorsehen eines Sorptionsfilters zum temporären Speichern von verdampfendem Kraftstoff aus einem Kraftstofftank und einer dem Sorptionsfilter frischluftseitig angeordneten Pumpe, die über ein Umschaltventil mit dem Sorptionsfilter fluidleitend verbunden wird,
- Schalten des Umschaltventils in eine Schaltstellung, in der eine Fluidverbindung zwischen der Pumpe und dem Sorptionsfilter freigegeben wird, und
- wahlweises Ansteuern der Pumpe zum aktiven Fördern eines Fluidstroms zum Regenerieren des Sorptionsfilters oder zum Durchführen einer Tankleckdiagnose.

Es ist ein Verfahren offenbart, mit dem wahlweise eine Regenerierratenerhöhung eines Sorptionsfilters und eine Tankleckdiagnose eines Tankentlüftungssystems durchgeführt wird. Hierfür wird der Sorptionsfilter über ein Umschaltventil fluidleitend mit einer Pumpe verbunden. Das

Umschaltventil und die Pumpe werden vorzugsweise über eine Steuereinheit betrieben.

Zum Erzeugen eines Fluidstroms, der den Sorptionsfilter regeneriert, wird das Umschaltventil in eine Durchlassrichtung geschaltet. Die Pumpe wird derart eingestellt, dass sie eine hinreichend große Menge an Fluid durch den Sorptionsfilter fördert, die erforderlich ist, um die angereicherten Kraftstoffkomponenten zu desorbieren und über ein geöffnetes Tankentlüftungsventil einem einem Verbrennungsmotor vorgelagertem Saugrohr zur Verbrennung zuzuführen.

Zum Durchführen einer Tankleckdiagnose wird das Umschaltventil ebenfalls in eine Durchlassrichtung geschaltet. Das Tankentlüftungsventil wird hingegen geschlossen und ein Überdruck im Tankentlüftungssystem aufgebaut. Anhand von ermittelten Druckverläufen während des Pumpens und anschließend bei geschlossenem Umschaltventil kann auf ein etwaiges Leck geschlossen werden.

Des Weiteren ist ein Kraftfahrzeug mit einer erfindungsgemäßen Vorrichtung zum wahlweisen Regenerieren und Durchführen einer Tankleckdiagnose eines Tankentlüftungssystems geschaffen.

Das erfindungsgemäße Kraftfahrzeug ist in vorteilhafter Weise mit einer Vorrichtung gemäß den oben erläuterten Merkmalen ausgestattet. Eine solche Vorrichtung gewährleistet, dass zum einen eine hinreichend gute Regenerierung des Sorptionsfilters in allen Betriebszuständen zur Verfügung gestellt wird. Zum anderen ist auf eine kostengünstige und einfache Art und Weise stets eine On-Board-Tankleckdiagnose durchführbar.

Das erfindungsgemäße Kraftfahrzeug kann insbesondere mit einem Turbomotor ausgestattet sein, vorzugsweise mit einem Downsize-Turbomotor, der bei einem kleineren Hubvolumen eine vergleichbare Motorleistung zu Saugmotoren mit größerem Hubvolumen gewährleistet. Mittels der Pumpe, die Fluid zum Regenerieren des Sorptionsfilters aktiv durch den Sorptionsfilter fördern kann, wird das Problem überwunden, dass Turbomotoren Betriebszustände mit nicht ausreichendem Unterdruck im Saugrohr aufweisen, bei denen der Sorptionsfilter oft nicht ausreichend regeneriert wird. Wenn die Pumpe aktiv Spülfluid, wie Frischluft, in Richtung des Verbrennungsmotors fördert, so wird eine hinreichend starke Fluidströmung zur Verfügung gestellt, die den Sorptionsfilter in allen Motorbetriebsbereichen vollständig regeneriert, das heißt die flüchtigen Substanzen des Kraftstoffs werden auch ohne Saugrohrunterdruck desorbiert und zur Verbrennung dem Motor zugeleitet. Gleiches gilt auch für Motoren mit Ventilhubsteuerung, die weitgehend entdrosselt und ohne wesentlichen Saugrohrunterdruck betrieben werden. Wenn die Pumpe hingegen einen Überdruck im Tankentlüftungssystem erzeugt, so kann eine zuverlässige Diagnose hinsichtlich eines etwaigen Lecks durchgeführt werden.

### Kurzbeschreibung der Zeichnungen

Nachfolgend werden Ausführungsbeispiele der erfindungsgemäßen Lösung anhand der beigefügten Zeichnungen näher erläutert. Es zeigen:
- Fig. 1: eine schematische Darstellung eines Tankentlüftungssystems mit einem ersten Ausführungsbeispiel einer erfindungsgemäßen Vorrichtung mit einem Zweiwegeventil,
- Fig. 2: eine schematische Darstellung eines Tankentlüftungssystems mit einem zweiten Ausführungsbeispiel einer erfindungsgemäßen Vorrichtung mit einem Dreiwegeventil,
- Fig. 3: eine schematische Darstellung eines Tankentlüftungssystems mit einem dritten Ausführungsbeispiel einer nicht erfindungsgemäßen Vorrichtung mit einem Referenzleck,
- Fig. 4: eine schematische Darstellung des Tankentlüftungssystems gemäß Fig. 3 mit einer Ventilstellung, die für ein Betanken des Kraftstofftanks geschaltet ist, und
- Fig. 5: eine schematische Darstellung des Tankentlüftungssystems gemäß Fig. 3, die einem Turbomotor zugeordnet ist.

### Beschreibung von Ausführungsformen

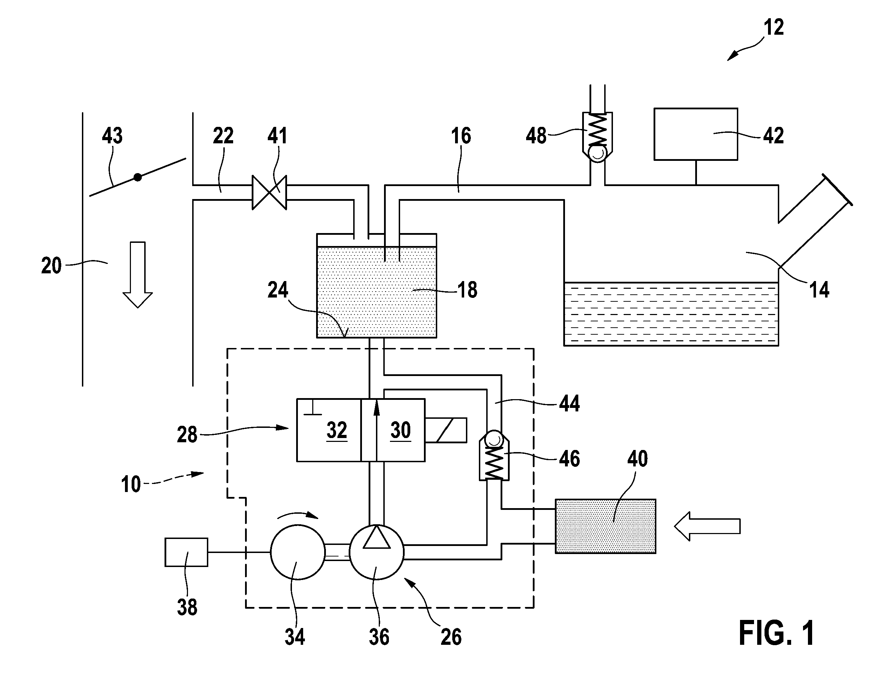

Fig. 1 veranschaulicht eine Vorrichtung 10 zum Regenerieren und Durchführen einer Tankleckdiagnose eines Tankentlüftungssystems 12. Das Tankentlüftungssystem 12 umfasst einen Kraftstofftank 14, der über eine

Tankanschlussleitung 16 mit einem Sorptionsfilter 18 fluidleitend verbunden ist. Der Sorptionsfilter 18 ist als ein Aktivkohlefilter ausgebildet, der flüchtige Komponenten an verdampfendem Kraftstoff durch Ad- und Desorption temporär speichern kann. Der Sorptionsfilter 18 ist ferner mit einem einem Verbrennungsmotor vorgeschalteten Saugrohr 20 über eine Spülleitung 22 fluidleitend verbunden. Über die Tankanschlussleitung 16 können somit flüchtige Komponenten des Kraftstoffs, wie Kohlenwasserstoffe, vom Kraftstofftank 14 in den Sorptionsfilter 18 geleitet, gespeichert und von dort aus über ein getaktet angesteuertes Tankentlüftungsventil 41 und die Spülleitung 22 dem Motor dosiert zur Verbrennung zugeführt werden.

Der Sorptionsfilter 18 weist eine Seite 24 auf, die der Atmosphäre, das heißt der Frischluft zugewandt ist. An dieser der Frischluft zugewandten Seite 24 ist die Vorrichtung 10 angeordnet, die eine Pumpe 26 umfasst, die über ein Umschaltventil 28 fluidleitend mit dem Sorptionsfilter 18 verbunden ist. Das Umschaltventil 28 ist vorliegend als ein elektromagnetisch ansteuerbares Zweiwegeventil gestaltet, das in eine erste Schaltstellung 30 und in eine zweite Schaltstellung 32 schaltbar ist. In der ersten Schaltstellung 30 wird die fluidleitende Verbindung zwischen der Pumpe 26 und dem Sorptionsfilter 18 freigegeben und in der zweiten Schaltstellung 32 versperrt.

Die Pumpe 26 kann alternativ nur ein- bzw. ausschaltbar oder getaktet stromgesteuert sein und umfasst einen Motor 34 sowie einen Verdichter 36. Eine mit dem Motor 34 gekoppelte Steuereinheit 38 schaltet die Pumpe 26 bei Bedarf in einen ein- oder ausgeschalteten Betriebszustand oder regelt eine Durchflussrate der Pumpe 26. Wenn die Pumpe 26 eingeschaltet ist, dann treibt der Motor 34 den Verdichter 36 an, der ein Spülfluid, vorliegend Frischluft, über einen mit einem Frischluftfilter 40 versehenen Einlass einsaugt, verdichtet und über das geöffnete Umschaltventil 28 in der ersten Schaltstellung 30 in den Sorptionsfilter 18 fördert. Dabei wird aktiv eine Fluidströmung erzeugt.

Die Fluidströmung kann erfindungsgemäß wahlweise zum Regenerieren des Sorptionsfilters 18 sowie zum Durchführen einer Tankleckdiagnose genutzt werden. Der Fluidstrom ist hierfür über die Steuereinheit 38 optimal variabel einstellbar, wodurch unnötige Stromaufnahme der Pumpe 26 verhindert und der Wirkungsgrad verbessert wird.

Beim Regenerieren des Sorptionsfilters 18 ist das in der Spülleitung 22 zwischengeschaltetes Tankentlüftungsventil 41 geöffnet und die durch den Sorptionsfilter 18 geförderte Frischluft desorbiert die temporär gespeicherten verdampften Kraftstoffkomponenten. Die mit dem verdampften Kraftstoff angereicherte Luft wird dem Saugrohr 20 unterhalb einer Drosselklappe 43 zur Verbrennung im Motor zugeführt.

Das Tankentlüftungsventil 41 stellt in voll geöffneter Stellung einen relativ großen Öffnungsquerschnitt mit geringem Strömungswiderstand zur Verfügung. Dadurch wird ein Druckabfall am Tankentlüftungsventil 41 bei maximaler Fluidströmung sowie ein sich im Tank 14 aufbauender Druck minimiert. Der Tank 14 kann daher keine besondere Überdruckfestigkeit aufweisen und ist kostengünstig aus Kunststoff gefertigt.

Durch das Einschalten der Pumpe 26 kann sichergestellt werden, dass immer eine ausreichende Regenerierung des Aktivkohlefilters erfolgt, auch wenn längere Zeit kein ausreichender Saugrohrunterdruck vorhanden ist, wie bei längerer Bergfahrt mit weit geöffneter Drosselklappe oder bei Motoren mit Ventilhubsteuerung und dadurch weitgehend entdrosseltem Betrieb.

Wenn während des Fahrbetriebs des Kraftfahrzeugs und bei der Regenerierung des Sorptionsfilters 18 ein bestimmter Druck mittels der Pumpe 26 eingestellt wird, so wirkt sich dieser vorteilhaft auf eine Ausgasung des Kraftstoffs im Kraftstofftank 14, insbesondere während einer Bergfahrt aus. Infolge des erhöhten Drucks im Tank 14 findet eine geringere Ausgasung des Kraftstoffs statt, wodurch die Gefahr eines Durchbruchs von flüchtigen Kraftstoffkomponenten im Sorptionsfilter 18 gemindert ist.

Während des Durchführens der Tankleckdiagnose ist zunächst das Umschaltventil 28 geöffnet (erste Schaltstellung 30). Das Tankentlüftungsventil 41 ist hingegen geschlossen und dichtet das Tankentlüftungssystem 12 in Richtung des Saugrohrs 20 fluiddicht ab. Die Pumpe 26 fördert über das geöffnete Umschaltventil 28 aktiv Frischluft in das Tankentlüftungssystem 12 und erzeugt einen Überdruck. Wenn ein bestimmter Druck eingestellt ist, wird die Pumpe 26 ausgeschaltet und das Umschaltventil 28 von der ersten in die zweite Schaltstellung 30, 32 geschaltet, wodurch der Eingang zum Sorptionsfilter 18 verschlossen wird. Ein in dem Kraftstofftank 14 angeordneter Drucksensor 42 oder Tankdruckschalter ermittelt über einen bestimmten Zeitverlauf Druckwerte, anhand derer ein etwaiges Leck im Tankentlüftungssystem 12 detektiert werden kann.

Während des Fahrbetriebs des Kraftfahrzeugs findet eine Grobleckerkennung durch den erzeugten Überdrucks statt. Im Abstellfall des Kraftfahrzeugs erfolgt, wenn die Druckverläufe nicht durch Bewegung des Kraftstoffs im Tank mit verstärkter Ausgasung gestört werden, hingegen eine Feinleckerkennung über die aktive Fluidförderung mittels der Pumpe 26. Bei der Grobleckerkennung kann ferner erkannt werden, ob ein Tankdeckel fluiddichtend auf einen Tankverschluss aufgesetzt worden ist.

Darüber hinaus ermöglicht die erfindungsgemäße Vorrichtung 10 auch eine Regenerierung des Sorptionsfilters 18 im Teillastbetrieb des Motors über den bei mindestens teilgeschlossener Drosselklappe 43 erzeugten Unterdruck. Hierfür wird die Pumpe 26 über die Steuereinheit 38 in einen ausgeschalteten Betriebszustand und das Umschaltventil 28 und das Tankentlüftungsventil 41 in Durchlassöffnung geschaltet. Aufgrund des in dem Saugrohr 20 herrschenden Unterdrucks wird Luft der Atmosphäre durch den Sorptionsfilter 18 über den Frischluftfilter 40 und die Pumpe 26 gesaugt, die vorzugsweise im Stillstand einen geringen Strömungswiderstand aufweist.

Über den mittels des Tankdrucksensors 42 gemessenen Tankdruck und den gemessenen oder modellierten Saugrohrunterdruck kann näherungsweise die Druckdifferenz über dem Tankentlüftungsventil 41 bestimmt und daraus das erforderliche Taktverhältnis für den gewünschten Durchfluss berechnet werden.

Des Weiteren ist eine Druckausgleichsleitung 44 mit einem zwischengeschalteten Druckbegrenzungsventil 46 parallel zum Umschaltventil 28 angeordnet. Die Druckausgleichsleitung 44 verbindet den Sorptionsfilter 18 mit dem Frischluftfilter 40 fluidleitend, wenn der Druck im Tank 14 zu groß wird, und gewährleistet auf diese Weise einen gefilterten Druckausgleich zwischen dem Kraftstofftank 14 und der Atmosphäre. Somit wird ggf. ergänzend zum Umschalten des Zweiwegeventils 28 sichergestellt, dass während eines Betankens des Kraftstofftanks 14 ein möglichst geringer Strömungswiderstand auf der Frischluftseite 24 des Sorptionsfilters 18 vorliegt, der zu einer Druckerhöhung im Tank 14 und zu einem Abschalten einer Zapfpistole führen könnte.

Das in der Druckausgleichsleitung 44 zwischengeschaltete Druckbegrenzungsventil 46 öffnet sich in Richtung der Atmosphäre bei einem Aktivierungsdruck, der unterhalb eines zulässigen Tankdrucks liegt, vorliegend zum Beispiel bei ca. 50 hPa. Der Aktivierungsdruck des Druckbegrenzungsventils 46 ist insbesondere geringer als der Aktivierungsdruck eines im Kraftstofftank 14 angeordneten Tankdruckbegrenzungsventils 48, der in etwa bei 150 hPa liegt. Im Tankentlüftungssystem 12 kann sich im Fahrzeugbetrieb somit ein Druck bis zu 50 hPa aufbauen, der zu einer geringeren Verdampfungsrate des Kraftstoffs im Tank 14 führt. Wird der Druckwert von ca. 50 hPa überschritten, so erfolgt ein Gasdruckausgleich über die Druckausgleichsleitung 44.

Somit wird in Fällen einer zu hohen Förderrate der Pumpe 26 oder einer Drucküberhöhung im Tank 14 durch starkes Ausgasen sichergestellt, dass kein Kraftstoffdampf durch das Tankdruckbegrenzungsventil 48, sondern nur über den Aktivkohlefilter 18 gefiltertes Fluid nach außen gelangt.

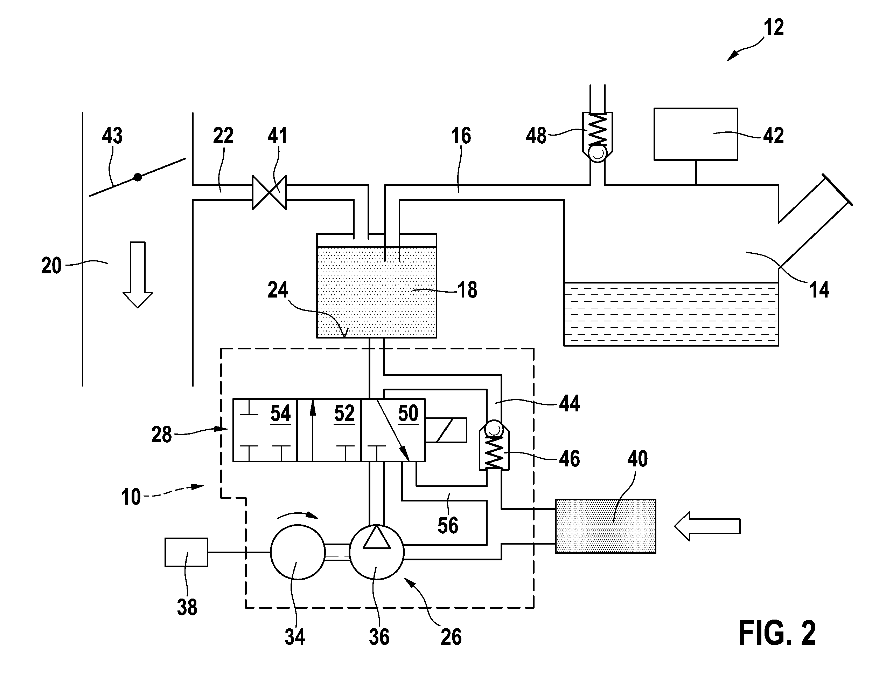

Fig. 2 zeigt das Tankentlüftungssystem 12 mit der Vorrichtung 10 gemäß Fig. 1, bei der das Umschaltventil 28 als ein elektromagnetisch ansteuerbares Dreiwegeventil 28 gestaltet ist.

Das Dreiwegeventil 28 ist in eine erste Schaltstellung 50, in eine zweite Schaltstellung 52 und in eine dritte Schaltstellung 54 schaltbar. In der ersten Schaltstellung 50 ist die fluidleitende Verbindung zwischen der Pumpe 26 und dem Sorptionsfilter 18 pumpenseitig versperrt und eine fluidleitende Verbindung mit einem geringen Strömungswiderstand zwischen dem Sorptionsfilter 18 und einer Bypassleitung 56 geöffnet. Die Bypassleitung 56 verbindet den Sorptionsfilter 18 mit dem Frischluftfilter 40 fluidleitend und gewährleistet so einen Druckausgleich zwischen dem Tankentlüftungssystem 12 und der Atmosphäre. Wenn sich das Umschaltventil 28 in der ersten Schaltstellung 50 befindet, ist die Pumpe 26 ausgeschaltet. In diesem Zustand kann ein Betanken des Kraftstofftanks 14 oder ein Regenerieren des Sorptionsfilters 18 mittels des vom Saugrohr 20 erzeugten Unterdrucks erfolgen. Ein Vorteil liegt darin, dass in beiden Fällen ein geringer Strömungswiderstand vorliegt.

In der zweiten Schaltstellung 52 ist die fluidleitende Verbindung zwischen der Pumpe 26 und dem Sorptionsfilter 18 geöffnet und die Verbindung zur Bypassleitung 56 versperrt. In diesem Zustand ist die Pumpe 26 eingeschaltet. Die Pumpe 26 fördert aktiv Fluid durch den Sorptionsfilter 18 zum Regenerieren desselben oder zum Erzeugen eines Überdrucks zum Durchführen einer Tankleckdiagnose.

In der dritten Schaltstellung 54 wird die fluidleitende Verbindung zwischen dem Sorptionsfilter 18 und der Pumpe 26 sowie der Bypassleitung 56 sorptionsfilterseitig versperrt. Das Tankentlüftungssystem 12 ist somit bei geschlossenem Tankentlüftungsventil 41 fluiddicht geschlossen und es kann eine Tankleckdiagnose durch Ermittlung von Druckwerten mit Hilfe des Drucksensors 42 durchgeführt werden.

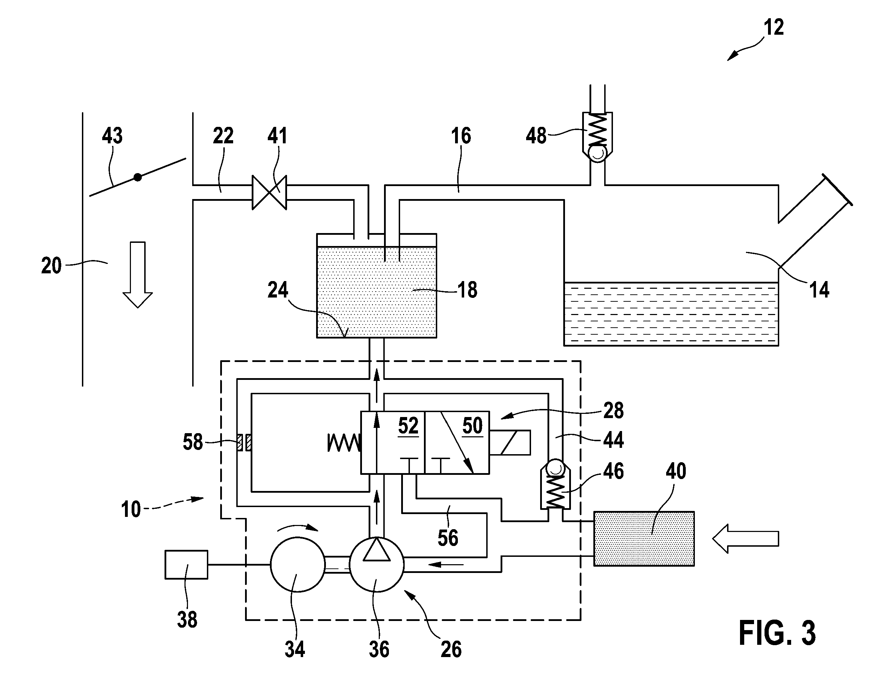

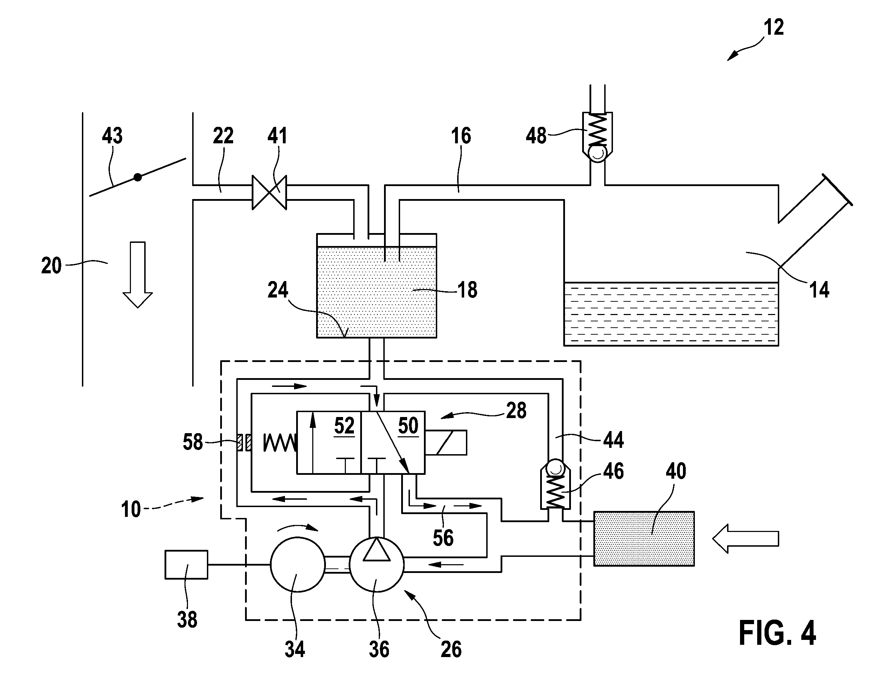

Fig. 3 und 4 zeigen ein Tankentlüftungssystem 12 gemäß Fig. 2 mit einer Vorrichtung 10 zum wahlweisen Regenerieren und Durchführen einer Tankleckdiagnose. Das System 12 umfasst jedoch keinen Drucksensor 42, sondern ein Referenzleck 58, das parallel zum Zweiwegeventil 28 geschaltet ist, sowie eine Strommesseinrichtung zur Erfassung des Pumpenstroms.

Fig. 3 zeigt das Zweiwegeventil 28 in der zweiten Schaltstellung 52, das heißt eine fluidleitende Verbindung zwischen der Pumpe 26 und dem Sorptionsfilter 18 ist freigeschaltet.

Fig. 4 veranschaulicht hingegen das Zweiwegeventil 28 in der ersten Schaltstellung 50, in der eine direkte fluidleitende Verbindung zwischen der Pumpe 26 und dem Sorptionsfilter 18 pumpenseitig versperrt und eine fluidleitende Verbindung zwischen dem Sorptionsfilter 18 und dem frischluftseitigen Luftfilter 40 freigegeben ist.

Wenn das Zweiwegeventil 28 die zweite Schaltstellung 52 gemäß Fig. 3 einnimmt und die Pumpe 26 eingeschaltet ist, dann erzeugt die Pumpe 26 aktiv eine Fluidströmung zur Regenerierung des Sorptionsfilters 18 oder zum Durchführen einer Tankleckdiagnose gemäß dem oben erörterten Verfahren der Pumpenstrommessung.

Das zu dem Zweiwegeventil 28 parallel geschaltete Referenzleck 58 dient der Genauigkeitserhöhung bei der Kleinleckdiagnose. Das Referenzleck 58 wird dazu mittels der Pumpe 26 mit Druck beaufschlagt, wenn sich das Dreiwegeventil 28 in der ersten Schaltstellung 50 befindet, in der die Fluidverbindung pumpenseitig verschlossen ist (vgl. Fig. 4). In diesem Fall wird Frischluft durch die Pumpe 26 und das Referenzleck 58 gefördert und durch das Ventil 28 zurückgeführt. Dies dient in bekannter Weise zur genauen Ermittlung des Pumpenstroms bei einem definierten Kleinleck.

Ein Vergleich der Stromaufnahme der Pumpe 26 in der zweiten Schaltstellung 52 zum Zwecke der Durchführung einer Tankleckdiagnose und der ersten Schaltstellung 50, bei der das Referenzleck 58 mit Druck beaufschlagt wird, ermöglicht einen Rückschluss auf ein etwaiges kleineres Leck.

Um für die Kleinleckdiagnose einen ggf. erforderlichen geringeren Fluidstrom zur Verfügung zu stellen, ist die Pumpe 26 in der vorliegenden Ausführungsform als eine zweistufige Pumpe 26 ausgebildet. Alternativ kann die Pumpe 26 zum Beispiel getaktet angesteuert werden und der Strom bei einem definierten kleinen Tastverhältnis gemessen werden.

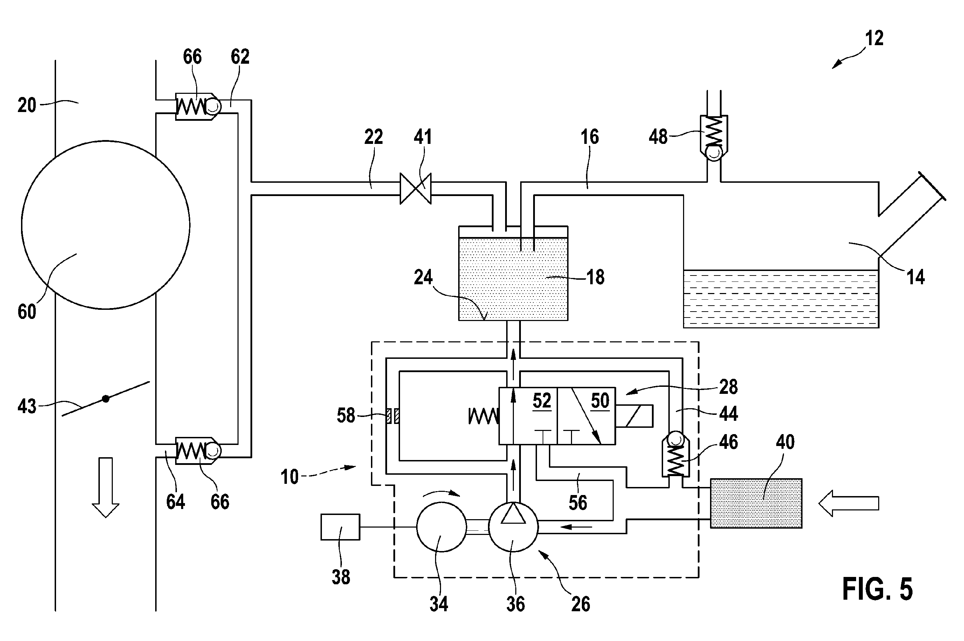

Fig. 5 zeigt die Vorrichtung 10 zum wahlweisen Regenerieren und Durchführen einer Tankleckdiagnose des Tankentlüftungssystems 12 gemäß Fig. 3 bei einem Turbomotor mit einer Turbolader-Einheit 60.

Mittels der Vorrichtung 10 wird das Problem überwunden, dass Turbomotoren seltener Betriebszustände mit ausreichendem Unterdruck im Saugrohr 20 aufweisen, so dass der Sorptionsfilter 18 oft nicht ausreichend regeneriert wird.

Die Spülleitung 22 des Tankentlüftungssystems 12 ist in bei Turbomotoren bekannter Weise über eine erste Leitung 62 an einer der Turbolader-Einheit 60 vorgelagerten Einleitstelle und über eine zweite Leitung 64 an einer der Turbolader-Einheit 60 nachgelagerten Einleitstelle mit dem Saugrohr 20 fluidleitend verbunden.

Beide Einleitstellen sind mit Rückschlagventilen 66 versehen, damit eine Bypassströmung vermieden wird. Bei herkömmlichen Systemen wird bei ausreichendem Saugrohrunterdruck über die zweite Leitung 64 und ansonsten über die erste Leitung 62 regeneriert. Durch einen Venturi-Effekt an der Einleitstelle beim Ventil 66 wird ein gewisser Unterdruck erzeugt, der jedoch nicht zu einer ausreichenden Regeneriererhöhung führt.

Mit der Vorrichtung 10 wird bei erkannter Beladung des Regenerierstroms und nicht ausreichendem Saugrohrunterdruck die Pumpe 26 eingeschaltet und dadurch die Regenerierrate wie oben beschrieben über die erste Einleitstelle erhöht.

Die Anordnung für Turbomotoren gemäß Fig. 5 ist gleichermaßen für die Tankentlüftungssysteme 12 gemäß den Fig. 1 und 2 möglich.

## Patentansprüche

1. Vorrichtung (10) zum wahlweisen Regenerieren und Durchführen einer Tankleckdiagnose eines Tankentlüftungssystems (12), insbesondere eines Kraftfahrzeugs, mit einem Sorptionsfilter (18) zum temporären Speichern von verdampfendem Kraftstoff aus einem Kraftstofftank (14) und einer dem Sorptionsfilter (18) frischluftseitig angeordneten Pumpe (26), die mit dem Sorptionsfilter (18) fluidleitend verbunden ist, wobei die Pumpe (26) eingerichtet ist, eine Fluidströmung zum Regenerieren des Sorptionsfilters (18) zu erzeugen, wobei die Pumpe (26) über ein Umschaltventil (28) mit dem Sorptionsfilter (18) fluidleitend verbunden ist, **dadurch gekennzeichnet, dass** das Umschaltventil (28) ein Zweiwegeventil oder ein Dreiwegeventil ist, das in einer Schaltstellung (32,54) eine Fluidverbindung zwischen der Pumpe (26) und dem Sorptionsfilter (18) versperrt und damit das Tankentlüftungssystem (12) bei einem geschlossenen Tankentlüftungsventil (41) fluiddicht schließt.

2. Vorrichtung (10) nach Anspruch 1,
**dadurch gekennzeichnet, dass** die Pumpe (26) eingerichtet ist, eine Fluidströmung zum Durchführen einer Tankleckdiagnose zu erzeugen.

3. Vorrichtung (10) nach einem der vorhergehenden Ansprüche,
**dadurch gekennzeichnet, dass** eine Druckausgleichsleitung (44) mit einem Druckbegrenzungsventil (46) parallel zum Umschaltventil (28) geschaltet und mit der Atmosphäre fluidleitend verbunden ist.

4. Vorrichtung (10) nach einem der vorhergehenden Ansprüche,
**dadurch gekennzeichnet, dass** die Pumpe (26) als eine zweistufige Pumpe (26) mit unterschiedlicher Förderleistung ausgebildet ist.

5. Vorrichtung (10) nach Anspruch 4,
**dadurch gekennzeichnet, dass** die Pumpe (26) über eine Steuereinheit (38) getaktet ansteuerbar ist und dadurch die variable Förderleistung bewirkt.

6. Vorrichtung (10) nach Anspruch 4,
**dadurch gekennzeichnet, dass** die variable Förderleistung mittels einer unabhängig ansteuerbaren Zusatzpumpe mit einer höheren Förderleistung über ein Rückschlagventil parallel zur Pumpe (26) bewirkt ist.

7. Kraftfahrzeug mit einer Vorrichtung (10) nach einem der Ansprüche 1 bis 6.

## Claims

1. Device (10) for selectively regenerating and performing a tank leakage diagnosis of a tank ventilation system (12), especially of a motor vehicle, having a sorption filter (18) for temporarily storing fuel evaporating from a fuel tank (14), and having a pump (26), which is arranged on the fresh-air side of the sorption filter (18) and which has a fluid-carrying connection to the sorption filter (18), wherein the pump (26) is designed to generate a fluid flow for regenerating the sorption filter (18), wherein the pump (26) has a fluid-carrying connection to the sorption filter (18) by way of a switching valve (28), **characterized in that** the switching valve (28) is a two-way valve or a three-way valve, which in a switch position (32, 54) closes a fluid connection between the pump (26) and the sorption filter (18) and thus closes the tank ventilation system (12) fluid-tight when a tank ventilation valve (41) is closed.

2. Device (10) according to Claim 1, **characterized in that** the pump (26) is designed to generate a fluid flow for performing a tank leakage diagnosis.

3. Device (10) according to either of the preceding claims, **characterized in that** a pressure equalization line (44) having a pressure-limiting valve (46) is connected in parallel with the switching valve (28) and has a fluid-carrying connection to the atmosphere.

4. Device (10) according to one of the preceding claims, **characterized in that** the pump (26) is embodied as a two-stage pump (26) with a variable delivery rate.

5. Device (10) according to Claim 4, **characterized in that** actuation of the pump (26) by a control unit (38) may be timed, thereby producing the variable delivery rate.

6. Device (10) according to Claim 4, **characterized in that** the variable delivery rate is produced by means of an independently actuated auxiliary pump having a higher delivery rate by way of a non-return valve in parallel with the pump (26).

7. Motor vehicle having a device (10) according to one of Claims 1 to 6.

## Revendications

1. Dispositif (10) de régénération sélective et de réalisation d'un diagnostic de fuite de réservoir d'un système de ventilation de réservoir (12), notamment d'un véhicule automobile, avec un filtre par sorption (18) servant à l'accumulation temporaire de carburant évaporé hors d'un réservoir de carburant (14) et avec une pompe (26) disposée du côté d'air neuf du filtre par sorption (18) et reliée au filtre par sorption (18) de façon à permettre la conduction de fluide, la pompe (26) étant conçue pour produire un flux de fluide servant à la régénération du filtre par sorption (18), la pompe (26) étant reliée au filtre par sorption (18) via une soupape de commutation (28) de façon à permettre la conduction de fluide, **caractérisé en ce que** la soupape de commutation (28) est une soupape à deux voies ou une soupape à trois voies bloquant dans une position de connexion (32, 54) une liaison fluide entre la pompe (26) et le filtre par sorption (18) et fermant ainsi de façon étanche au fluide le système de ventilation de réservoir (12) en présence d'une soupape de ventilation de réservoir (41) fermée.

2. Dispositif (10) selon la revendication 1, **caractérisé en ce que** la pompe (26) est conçue pour produire un flux de fluide en vue de réaliser un diagnostic de fuite de réservoir.

3. Dispositif (10) selon l'une quelconque des revendications précédentes, **caractérisé en ce qu'**une compensation de la conduite de pression (44) avec une soupape de limitation de pression (46) est connectée parallèlement à la soupape de commutation (28) et est reliée à l'atmosphère de façon à permettre la conduction de fluide.

4. Dispositif (10) selon l'une quelconque des revendications précédentes, **caractérisé en ce que** la pompe (26) prend la forme d'une pompe (26) à deux niveaux avec une puissance d'extraction différente.

5. Dispositif (10) selon la revendication 4, **caractérisé en ce que** la pompe (26) peut être commandée de façon cadencée via une unité de commande (38) ce qui provoque une puissance d'extraction variable.

6. Dispositif (10) selon la revendication 4, **caractérisé en ce que** la puissance d'extraction variable est provoquée au moyen d'une pompe supplémentaire commandée indépendamment avec une puissance d'extraction supérieure via une soupape de retenue parallèle à la pompe (26).

7. Véhicule automobile avec un dispositif (10) selon l'une quelconque des revendications 1 à 6.
